# EUROPEAN PATENT APPLICATION

(11) **EP 4 815 260 A1**
(43) Date of publication of application: **30.09.2026**
(21) Application number: 25769292.1
(22) Date of filing: 05.03.2025
(51) Int. Cl.: H02K 1/14

(54) **ELECTRIC TOOL, SELF-DRIVING DEVICE, AND MOTOR**

(30) Priority: 14.03.2024 CN 202410294889
(71) Applicant: Nanjing Chervon Industry Co., Ltd., Nanjing, Jiangsu 211106 (CN)
(72) Inventor: YANG, Dezhong, Nanjing, Jiangsu 211106 (CN); LI, Nian, Nanjing, Jiangsu 211106 (CN); XU, Qian, Nanjing, Jiangsu 211106 (CN); WANG, Hongwei, Nanjing, Jiangsu 211106 (CN)
(74) Representative: Sun, Yiming
(86) International application number: PCT/CN2025/080627
(87) International publication number: WO 2025/190121

(57) **Abstract**

A power tool includes: a functional part (20); an electric motor (10) that drives the functional part (20) to perform work; and a power supply device (30) that supplies power to at least the electric motor (10). The electric motor (10) includes a motor shaft (14), a stator assembly (11), a rotor assembly (12), and a control assembly (13). The stator assembly (11), the rotor assembly (12), and the control assembly (13) are coaxially disposed along the motor shaft (14), and the stator assembly (11) and the rotor assembly (12) are nested with each other. The rotor assembly (12) includes a rotor winding (121). The control assembly (13) includes a stationary portion (131) and a rotating portion (132). The stationary portion (131) remains fixed relative to the stator assembly (11) during operation of the power tool, and the rotating portion (132) rotates about the motor shaft (14) with the rotor winding (121) during the operation of the power tool. Through non-contact coupling between the stationary portion (131) and the rotating portion (132), the control assembly (13) transfers electrical energy from the power supply device (30) to the rotor winding (121) or detects parameters related to a rotor current of the rotor winding (121) and/or a rotor voltage of the rotor winding (121).

## Description

This application claims priority to Chinese Patent Application No. 202410294889.2 filed with the China National Intellectual Property Administration (CNIPA) on Mar. 14, 2024, the disclosure of which is incorporated herein by reference in its entirety.

### TECHNICAL FIELD

The present application relates to the technical field of power tools, for example, a power tool, a self-driving apparatus, and an electric motor.

### BACKGROUND

Power tools such as mowers and chainsaws, which are widely used in various scenarios including landscaping and construction, mostly use electric motors as prime movers at present. Commonly, permanent-magnet motors may be employed. However, permanent-magnet motors use rare-earth permanent magnets or the like to provide magnetic field sources, which may suffer from demagnetization and increase related costs. In addition, with increasing demands on tool performance, fixed flux linkages in permanent-magnet motors make it difficult to implement flux weakening to increase speeds under heavy-load operating conditions and the like.

This part provides background information related to the present application, and the background information is not necessarily the existing art.

### SUMMARY

An object of the present application is to solve or at least alleviate part or all of the preceding problems. To this end, the present application provides a power tool, a self-driving apparatus, and an electric motor.

To achieve the preceding object, the present application adopts the technical solutions described below.

A power tool includes: a functional part; an electric motor that drives the functional part to perform work; and a power supply device that supplies power to at least the electric motor. The electric motor includes a motor shaft, a stator assembly, a rotor assembly, and a control assembly. The stator assembly, the rotor assembly, and the control assembly are coaxially disposed along the motor shaft, and the stator assembly and the rotor assembly are nested with each other. The rotor assembly includes a rotor winding, and the control assembly includes a stationary portion and a rotating portion, where the stationary portion remains fixed relative to the stator assembly during operation of the power tool, and the rotating portion rotates about the motor shaft with the rotor winding during the operation of the power tool. Through non-contact coupling between the stationary portion and the rotating portion, the control assembly transfers electrical energy from the power supply device to the rotor winding or detects parameters related to a rotor current of the rotor winding and/or a rotor voltage of the rotor winding.

In some examples, the electric motor is a brushless electrically excited synchronous motor.

In some examples, a projection of the stationary portion and a projection of the rotating portion along an axial direction of the motor shaft at least partially coincide.

In some examples, a projection of the stationary portion and a projection of the rotating portion along a radial direction of the motor shaft do not coincide.

In some examples, the stationary portion and the rotating portion cooperate to perform non-contact electromagnetic coupling to transfer the electrical energy from the power supply device to the rotor winding or detect the parameters related to the rotor current of the rotor winding and/or the rotor voltage of the rotor winding.

In some examples, the power tool further includes a controller that controls running of the electric motor, where the control assembly includes a detection device connected between the controller and the rotor winding, and the detection device detects the rotor current of the rotor winding and/or the rotor voltage of the rotor winding and transmits the rotor current of the rotor winding and/or the rotor voltage of the rotor winding to the controller.

In some examples, the detection device includes a detection coil connected to the rotor winding, the rotating portion includes the detection coil, and the detection coil is sleeved on the motor shaft.

In some examples, the detection device further includes a Hall element connected to the controller, the stationary portion includes the Hall element, and the Hall element acquires, through a Hall effect between the Hall element and the detection coil, the parameters related to the rotor current and/or the rotor voltage.

In some examples, the control assembly further includes a driving device connected between the power supply device and the rotor winding, and the driving device transfers the electrical energy from the power supply device to the rotor winding.

In some examples, the driving device includes a coupled inductor, the coupled inductor includes a secondary coil connected to the rotor winding, the rotating portion includes the secondary coil, and the secondary coil is sleeved on the motor shaft.

In some examples, a coupled inductor further includes a primary coil connected to the power supply device, the stationary portion includes the primary coil, and the primary coil is sleeved on the motor shaft.

In some examples, the driving device further includes a switching circuit connected between the power supply device and a coupled inductor, and the switching circuit receives a control signal from the controller and transfers the electrical energy from the power supply device to the coupled inductor based on the control signal.

A self-driving apparatus includes: an operating assembly including a functional part and an operating motor that drives the functional part; a traveling assembly including a traveling member and a traveling motor that drives the traveling member; and a power supply device that supplies power to at least the operating motor and the traveling motor. The operating motor or the traveling motor includes a motor shaft, a stator assembly, a rotor assembly, and a control assembly. The stator assembly, the rotor assembly, and the control assembly are coaxially disposed along the motor shaft, and the stator assembly and the rotor assembly are nested with each other. The rotor assembly includes a rotor winding, and the control assembly includes a stationary portion and a rotating portion, where the stationary portion remains fixed relative to the stator assembly during operation of the self-driving apparatus, and the rotating portion rotates about the motor shaft with the rotor winding during the operation of the self-driving apparatus. Through non-contact coupling between the stationary portion and the rotating portion, the control assembly transfers electrical energy from the power supply device to the rotor winding or detects parameters related to a rotor current of the rotor winding and/or a rotor voltage of the rotor winding.

An electric motor includes: a stator assembly and a rotor assembly, where the rotor assembly includes a rotor winding that rotates during operation of the electric motor. A driving device is connected between the rotor winding and a power supply device, and the driving device includes a stationary module that is connected to the power supply device and remains fixed and a rotating module that is connected to the rotor winding and rotates with the rotor winding. The stationary module is further connected to a controller and receives a control signal from the controller, where the stationary module transfers electrical energy from the power supply device to the rotating module based on the control signal through non-contact coupling with the rotating module, and the electrical energy is subsequently transferred to the rotor winding.

In some examples, the electric motor is a brushless electrically excited synchronous motor.

In some examples, the power supply device is a battery pack.

In some examples, the stationary module and the rotating module cooperate to perform non-contact electromagnetic coupling to transfer the electrical energy from the power supply device to the rotating module.

In some examples, the driving device performs direct current-direct current (DC-DC) conversion under control of the control signal.

In some examples, the stationary module includes a switching circuit and a primary coil of a coupled inductor, and the rotating module includes a secondary coil of the coupled inductor, where the switching circuit is connected between the power supply device and the primary coil, receives the control signal from the controller, and transfers the electrical energy from the power supply device to the primary coil based on the control signal.

In some examples, the rotating module further includes a rectification and filtering circuit connected between the secondary coil and the rotor winding.

In some examples, the switching circuit is a full-bridge switching power supply circuit.

In some examples, a detection device is connected between the rotor winding and the controller, and the detection device detects parameters related to a rotor current of the rotor winding and/or a rotor voltage of the rotor winding and transmits the parameters related to the rotor current of the rotor winding and/or the rotor voltage of the rotor winding to the controller.

In some examples, the stator assembly includes a stator winding that remains fixed during the operation of the electric motor, a second driving device is connected between the stator winding and the power supply device, and the second driving device receives a second control signal from the controller and transfers the electrical energy from the power supply device to the stator winding based on the second control signal.

In some examples, a second detection device is connected between the stator assembly and the controller, and the second detection device detects parameters related to a stator current of the stator winding and/or a stator voltage of the stator winding and transmits the parameters related to the stator current of the stator winding and/or the stator voltage of the stator winding to the controller.

In some examples, the controller outputs the corresponding control signal to the driving device based on parameters related to one or more of the rotor current, the rotor voltage, the stator current, and the stator voltage; and/or, the controller outputs the corresponding second control signal to the second driving device based on parameters related to one or more of the stator current, the stator voltage, the rotor current, and the rotor voltage.

In some examples, the control signal is a pulse-width modulation signal, and a rotor current and/or a rotor voltage are positively correlated to a duty cycle of the pulse-width modulation signal.

A power tool includes: a functional part; an electric motor that drives the functional part to perform work; and a power supply device that supplies power to at least the electric motor. The electric motor is the electric motor described in any one of the preceding examples.

An electric motor includes a stator assembly and a rotor assembly, where the rotor assembly includes a rotor winding that rotates during operation of the electric motor. A driving device is connected between the rotor winding and a power supply device, and the driving device is further connected to a controller, receives a control signal from the controller, and transfers electrical energy from the power supply device to the rotor winding based on the control signal. A detection device is connected between the rotor winding and the controller, and the detection device detects parameters related to a rotor current of the rotor winding and/or a rotor voltage of the rotor winding and transmits the parameters related to the rotor current of the rotor winding and/or the rotor voltage of the rotor winding to the controller. The controller outputs the corresponding control signal to the driving device based on the parameters related to the rotor voltage and/or the rotor current, and the driving device, the detection device, and the controller constitute a closed-loop negative feedback regulation system for dynamically regulating the rotor current of the rotor winding and/or the rotor voltage of the rotor winding.

In some examples, the control signal is a pulse-width modulation signal, and the controller regulates a duty cycle of the pulse-width modulation signal based on the parameters related to the rotor current and/or the rotor voltage from the detection device.

In some examples, the duty cycle of the pulse-width modulation signal is positively correlated to the rotor current and/or the rotor voltage.

In some examples, the detection device includes a second stationary module that is connected to the controller and remains fixed and a second rotating module that is connected to the rotor winding and rotates with the rotor winding, and the second stationary module acquires, through non-contact electromagnetic coupling with the second rotating module, the parameters related to the rotor current and/or the rotor voltage and transmits the parameters related to the rotor current and/or the rotor voltage to the controller.

In some examples, the second stationary module includes a Hall element, and the second rotating module includes a detection coil, where the Hall element acquires, through a Hall effect between the Hall element and the detection coil, the parameters related to the rotor current and/or the rotor voltage.

In some examples, the driving device includes a stationary module that is connected to the power supply device and remains fixed and a rotating module that is connected to the rotor winding and rotates with the rotor winding, where the stationary module includes a switching circuit and a primary coil of a coupled inductor, and the rotating module includes a secondary coil of the coupled inductor, where the switching circuit is connected between the power supply device and the primary coil and transfers the electrical energy from the power supply device to the primary coil based on the control signal.

In some examples, the rotating module further includes a rectification and filtering circuit connected between the secondary coil and the rotor winding.

In some examples, a detection coil is connected between the rectification and filtering circuit and the rotor winding.

In some examples, the detection coil and the rotor winding are connected in series, and a current flowing through the detection coil is substantially the same as a current flowing through the rotor winding.

In some examples, the controller dynamically regulates, based on parameters related to the rotor current and/or the rotor voltage received at present, the control signal outputted to the switching circuit, so as to reduce a fluctuation in the rotor current.

A power tool includes: a functional part; an electric motor that drives the functional part to perform work; and a power supply device that supplies power to at least the electric motor. The electric motor is the electric motor described in any one of the preceding examples.

### BRIEF DESCRIPTION OF DRAWINGS

FIG. 1 is a perspective view of an electric motor as an example of the present application.
FIG. 2 is an exploded view of the electric motor shown in FIG. 1.
FIG. 3 is a schematic diagram of electrical control of an electric motor as an example of the present application.
FIG. 4A is a schematic diagram of electrical control of a driving device in the electric motor shown in FIG. 3.
FIG. 4B is another schematic diagram of electrical control of a driving device in the electric motor shown in FIG. 3.
FIG. 5A is a circuit diagram of the driving device shown in FIG. 4B in an example.
FIG. 5B is a circuit diagram of the driving device shown in FIG. 4B in another example.
FIG. 5C is a circuit diagram of the driving device shown in FIG. 4B in another example.
FIG. 5D is a circuit diagram of the driving device shown in FIG. 4B in another example.
FIG. 6A is a schematic diagram of electrical control of a detection device in the electric motor shown in FIG. 3.
FIG. 6B is another schematic diagram of electrical control of a detection device in the electric motor shown in FIG. 3.
FIG. 7 is a perspective view of a power tool as an example of the present application.
FIG. 8A is a perspective view of a power tool as another example of the present application.
FIG. 8B is a perspective view of a power tool as another example of the present application.
FIG. 9 is a perspective view of a control assembly of an electric motor in the power tool shown in FIG. 7.
FIG. 10 is an exploded view of the control assembly of the electric motor shown in FIG. 9.
FIG. 11A is a plan view of a coupling surface of a stationary portion in the control assembly shown in FIG. 10 in an axial direction of a motor shaft.
FIG. 11B is a plan view of a coupling surface of a rotating portion in the control assembly shown in FIG. 10 in an axial direction of a motor shaft.

### Reference list:

- 100: power tool
- 10: electric motor
- 10a: operating motor
- 10b: traveling motor
- 20: functional part
- 30: power supply device
- 40: controller
- 11: stator assembly
- 12: rotor assembly
- 13: control assembly
- 14: motor shaft
- 111: stator winding
- 112: stator core
- 121: rotor winding
- 122: rotor core
- 131: stationary portion
- 132: rotating portion
- 13a: driving device
- 131a: stationary module
- 132a: rotating module
- 1310: first annular housing
- 1311: switching circuit
- 1312: primary coil of a coupled inductor
- 1320: second annular housing
- 1321: secondary coil of the coupled inductor
- 1322: rectification and filtering circuit
- 13b: detection device
- 131b: second stationary module
- 132b: second rotating module
- 1313: Hall element
- 1323: detection coil
- 13c: second driving device
- 13d: second detection device

### DETAILED DESCRIPTION

Before any examples of this application are explained in detail, it is to be understood that this application is not limited to its application to the structural details and the arrangement of components set forth in the following description or illustrated in the above drawings.

In this application, the terms "comprising", "including", "having" or any other variation thereof are intended to cover an inclusive inclusion such that a process, method, article or device comprising a series of elements includes not only those series of elements, but also other elements not expressly listed, or elements inherent in the process, method, article, or device. Without further limitations, an element defined by the phrase "comprising a ..." does not preclude the presence of additional identical elements in the process, method, article, or device comprising that element.

In this application, the term "and/or" is a kind of association relationship describing the relationship between associated objects, which means that there can be three kinds of relationships. For example, A and/or B can indicate that A exists alone, A and B exist simultaneously, and B exists alone. In addition, the character "/" in this application generally indicates that the contextual associated objects belong to an "and/or" relationship.

In this application, the terms "connection", "combination", "coupling" and "installation" may be direct connection, combination, coupling or installation, and may also be indirect connection, combination, coupling or installation. Among them, for example, direct connection means that two members or assemblies are connected together without intermediaries, and indirect connection means that two members or assemblies are respectively connected with at least one intermediate members and the two members or assemblies are connected by the at least one intermediate members. In addition, "connection" and "coupling" are not limited to physical or mechanical connections or couplings, and may include electrical connections or couplings.

In this application, it is to be understood by those skilled in the art that a relative term (such as "about", "approximately", and "substantially") used in conjunction with quantity or condition includes a stated value and has a meaning dictated by the context. For example, the relative term includes at least a degree of error associated with the measurement of a particular value, a tolerance caused by manufacturing, assembly, and use associated with the particular value, and the like. Such relative term should also be considered as disclosing the range defined by the absolute values of the two endpoints. The relative term may refer to plus or minus of a certain percentage (such as 1%, 5%, 10%, or more) of an indicated value. A value that did not use the relative term should also be disclosed as a particular value with a tolerance. In addition, "substantially" when expressing a relative angular position relationship (for example, substantially parallel, substantially perpendicular), may refer to adding or subtracting a certain degree (such as 1 degree, 5 degrees, 10 degrees or more) to the indicated angle.

In this application, those skilled in the art will understand that a function performed by an assembly may be performed by one assembly, multiple assemblies, one member, or multiple members. Likewise, a function performed by a member may be performed by one member, an assembly, or a combination of members.

In this application, the terms "up", "down", "left", "right", "front", and "rear" and other directional words are described based on the orientation or positional relationship shown in the drawings, and should not be understood as limitations to the examples of this application. In addition, in this context, it also needs to be understood that when it is mentioned that an element is connected "above" or "under" another element, it can not only be directly connected "above" or "under" the other element, but can also be indirectly connected "above" or "under" the other element through an intermediate element. It should also be understood that orientation words such as upper side, lower side, left side, right side, front side, and rear side do not only represent perfect orientations, but can also be understood as lateral orientations. For example, lower side may include directly below, bottom left, bottom right, front bottom, and rear bottom.

In this application, the terms "controller", "processor", "central processor", "CPU" and "MCU" are interchangeable. Where a unit "controller", "processor", "central processing", "CPU", or "MCU" is used to perform a specific function, the specific function may be implemented by a single aforementioned unit or a plurality of the aforementioned unit.

In this application, the term "device", "module" or "unit" may be implemented in the form of hardware or software to achieve specific functions.

In this application, the terms "computing", "judging", "controlling", "determining", "recognizing" and the like refer to the operations and processes of a computer system or similar electronic computing device (e.g., controller, processor, etc.).

Technical solutions proposed in the present application are described below in detail in conjunction with drawings and examples.

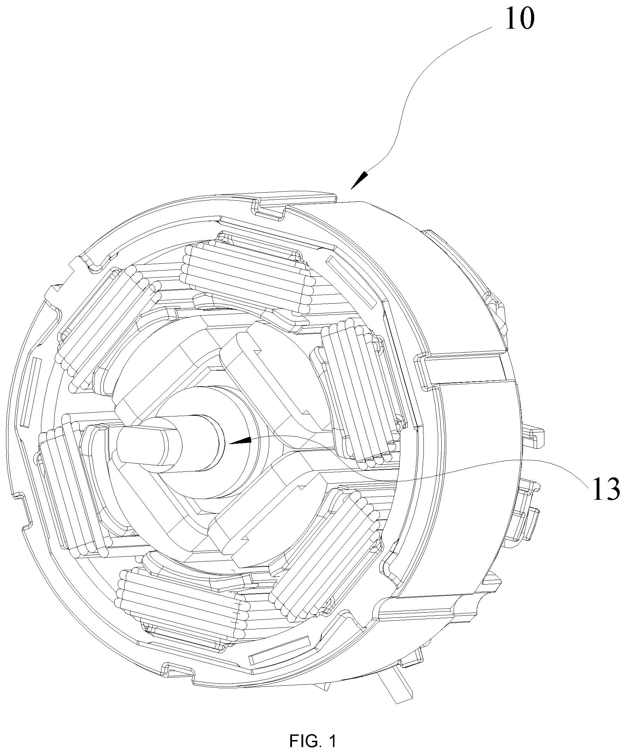

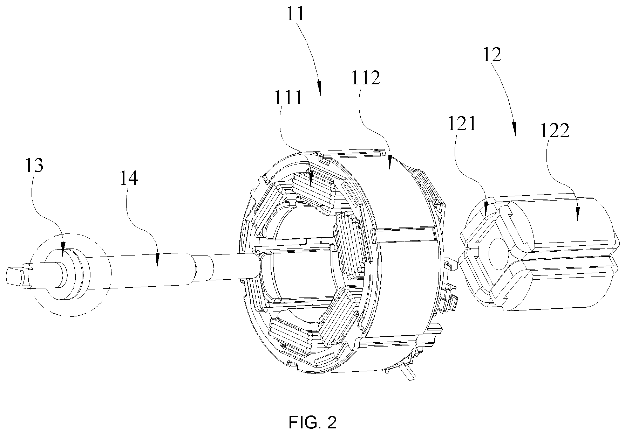

Referring to FIGS. 1 and 2, an electric motor 10 as an example in the present application is shown therein. The electric motor 10 includes at least a stator assembly 11 and a rotor assembly 12. For example, the stator assembly 11 and the rotor assembly 12 may be nested with each other and share a common motor axis. In some examples, the electric motor 10 also has a motor shaft 14 located on the motor axis. In other examples, the electric motor 10 further includes components such as a bracket, a motor housing, and a fan.

The stator assembly 11 includes a stator winding 111. The stator winding 111 may be wound around a stator core 112. The rotor assembly 12 includes a rotor winding 121. The rotor winding 121 may be wound around a rotor core 122. When the electric motor 10 operates, a stator current passes through the stator winding 111 to generate a corresponding stator magnetic field, and a rotor current passes through the rotor winding 121. The stator assembly 11 and the rotor assembly 12 then perform electromagnetic induction. Driven by the stator magnetic field, the rotor winding 121 rotates about the motor axis, while the stator winding 111 remains fixed. It is to be noted here that the electric motor 10 proposed in the present application is a brushless electrically excited synchronous motor. The electric motor 10 is an electrically excited motor. Unlike a permanent-magnet motor, the electric motor 10 may not use a permanent-magnet material such as a rare earth material as a magnetic field source in the electric motor. The electric motor 10 is provided with the rotor winding 121, and the magnetic field is excited by a current in the rotor winding 121 after being energized. In addition, although the rotor winding 121 that needs to be energized is disposed in the electric motor 10, the electric motor 10 is provided with no brush, unlike a brushed motor such as a series motor. In addition, the electric motor 10 is a synchronous motor. Unlike an induction motor, the electric motor 10 has the rotor winding 121 that rotates synchronously with the stator magnetic field.

In summary, the present application proposes a novel electric motor 10 mainly applied in power tools such as riding mowers, mowers, and snow throwers. Compared with present mainstream electric motors, the electric motor 10 reduces related costs and avoids demagnetization because the electric motor 10 does not use the permanent magnet. In addition, currents and/or voltages of the stator winding 111 and the rotor winding 121 are controllable and regulatable such that corresponding driving schemes can be flexibly designed for different operating conditions and different scenarios, and the electric motor 10 can also respond more promptly under fault conditions such as emergency shutdown, thereby improving applicability, accuracy, and safety.

In some examples, the electric motor 10 may be an outrunner, and the rotor assembly 12 is sleeved outside the stator assembly 11. In other examples, the electric motor 10 may be an inrunner, and the rotor assembly 12 is inserted through the stator assembly 11. The electric motor 10 shown in FIG. 1 is the inrunner. The inner rotor core 122 along a radial direction has four teeth, and rotor windings 121 wound on the teeth may be connected in series. The outer stator core 112 along the radial direction has six teeth. The stator windings 111 wound on the teeth may include three-phase windings. Windings of the same phase may be connected in series, and windings of different phases may form a star connection or a delta connection. It is to be understood that a structure of the electric motor 10 shown in FIG. 1 is only illustrative and does not constitute a specific limitation on the structure of the electric motor in the present application.

In some examples, the electric motor 10 is supplied with energy by a power supply device 30 such as a battery pack, and the power supply device 30 supplies electrical energy to the electric motor 10 in the form of direct current. In other examples, running of the electric motor 10 is controlled by a controller 40 such as a microcontroller unit (MCU), and the controller 40 may output a control signal to control the electric motor 10 to run in a corresponding manner. For example, the electric motor 10 may be used as a prime mover in a certain power tool 100. The power supply device 30 such as the battery pack may be detachably mounted on the power tool 100 and supply power to the electric motor 10. The controller 40 such as the MCU may be accommodated in a housing of the power tool 100 and control the running of the electric motor 10. Solutions for the power tool 100 and the electric motor 10 thereof are described below in detail, and the details are not described here.

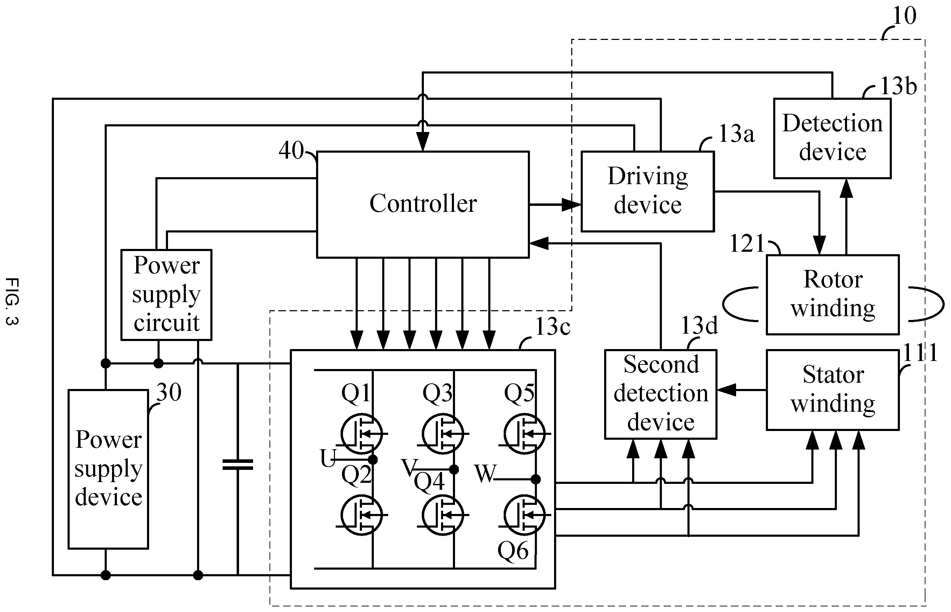

Referring to FIG. 3, a schematic diagram of electrical control of the electric motor 10 as an example in the present application is shown therein, which may be applied to the electric motor 10 shown in FIG. 1. In the present application, in addition to the stator assembly 11 and the rotor assembly 12, the electric motor 10 further includes a driving device 13a. The driving device 13a is connected between the power supply device 30 and the rotor winding 121 and is connected to the controller 40. After the power supply device 30 is connected, the driving device 13a serves as an energy transfer intermediary between the power supply device 30 and the rotor winding 121. After the controller 40 is connected, the driving device 13a receives the control signal from the controller 40. The driving device 13a is configured to drive a rotor to rotate and performs DC-DC conversion under control of the control signal so that the electrical energy from the power supply device 30 is transferred to the rotor winding 121.

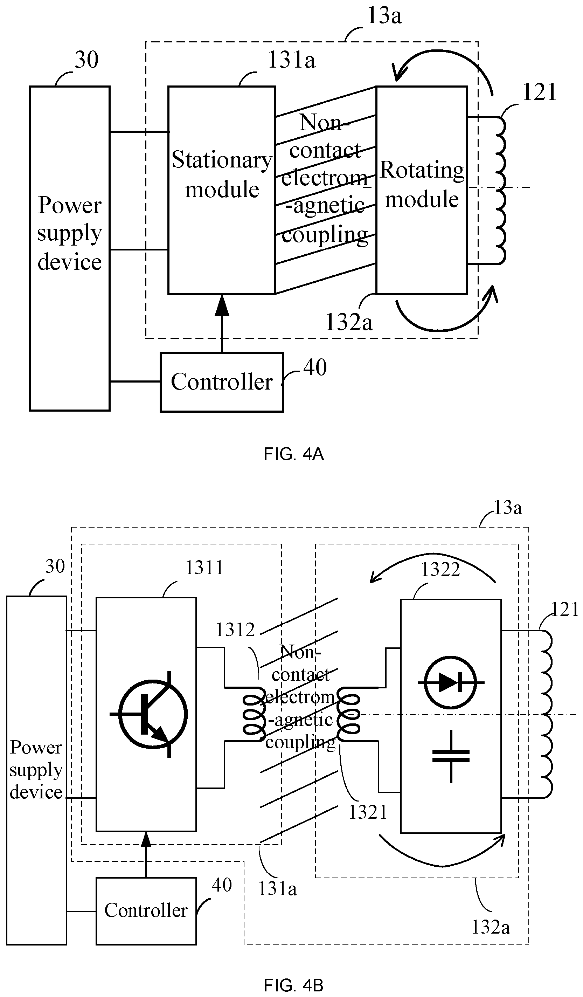

Based on the preceding description, the brushless electrically excited synchronous motor proposed in the present application is provided with the rotor winding 121 that rotates during the operation of the electric motor and is provided with no brush. Therefore, the driving device 13a as the intermediary needs to have a structure and circuit suitable for non-contact electrical energy transfer. For example, referring to FIGS. 4A and 4B, the driving device 13a may include a stationary module 131a and a rotating module 132a. The stationary module 131a is connected to the power supply device 30 and remains fixed relative to the power supply device 30 during the operation of the electric motor 10. The rotating module 132a is connected to the rotor winding 121 and rotates with the rotor winding 121 during the operation of the electric motor 10. The stationary module 131a is also connected to the controller 40 and receives the control signal from the controller 40 during the operation of the electric motor 10. Non-contact coupling under the control of the control signal can be implemented between the stationary module 131a and the rotating module 132a. That is, the stationary module 131a may transfer the electrical energy from the power supply device 30 to the rotating module 132a based on the preceding control signal through the non-contact coupling between the stationary module 131a and the rotating module 132a, and the electrical energy is subsequently transferred to the rotor winding 121. The preceding non-contact coupling includes electromagnetic coupling, photoelectric coupling, and a combination of the two. The following mainly introduces a solution in which related functions are implemented through the non-contact electromagnetic coupling. In some examples, the non-contact electromagnetic coupling between the stationary module 131a and the rotating module 132a may be implemented through a coupled inductor or a coupling capacitor. In other examples, the control signal may affect the amount of power transferred to the rotating module 132a or the rotor winding 121.

In some examples, the power supply device 30, the controller 40, and the electric motor 10 mentioned above may be regarded as portions independent of each other, and positions thereof may be configured relatively freely. The preceding driving device 13a may be configured to be adjacent to the electric motor 10 because the rotating module 132a rotates with the rotor winding 121. For example, the driving device 13a may be disposed in the electric motor 10. An interior and exterior of the electric motor 10 may be distinguished through the motor housing. The following description further proposes a specific arrangement of the driving device 13a in view of structure compactness requirements of the power tool 100.

In the preceding driving device 13a, the non-contact electromagnetic coupling under the control of the control signal between the stationary module 131a and the rotating module 132a may be implemented in various optional manners. In an optional implementation, as shown in FIG. 4B, the power supply device 30 supplies the electrical energy in the form of direct current. The stationary module 131a includes a switching circuit 1311 and a primary coil 1312 of the coupled inductor. The rotating module 132a includes a secondary coil 1321 of the coupled inductor. The switching circuit 1311 is connected between the power supply device 30 and the primary coil 1312 and receives the control signal from the controller 40. The switching circuit 1311 is an inverter circuit, and an on/off state of the circuit and a current flow direction in the circuit may be controlled through the control signal. The secondary coil 1321 is connected to the rotor winding 121. The primary coil 1312 and the secondary coil 1321 implement the energy transfer through inductive coupling. The electrical energy from the power supply device 30 is transferred, in a manner corresponding to the control signal, from the primary coil 1312 of the stationary module 131a to the secondary coil 1321 of the rotating module 132a and the rotor winding 121 connected to the secondary coil 1321. In some examples, in addition to the secondary coil 1321, the rotating module 132a further includes a rectification and filtering circuit 1322. The rectification and filtering circuit 1322 is connected between the secondary coil 1321 and the rotor winding 121 and may optimize stability of a current and/or voltage initially obtained from the secondary coil 1321. Compared with some solutions using integrated exciters or solutions using rotary transformers, this solution has a simpler circuit structure, requires fewer electronic components, and is highly controllable and regulatable, which is conducive to improving flexibility and accuracy of motor control.

In some examples, the control signal may be a pulse-width modulation (PWM) signal. The electrical energy transfer from the power supply device 30 to the primary coil 1312 may be controlled by regulating a duty cycle of the PWM signal and the like, thereby ultimately controlling the electrical energy transfer from the power supply device 30 to the rotor winding 121. For example, the rotor current of the rotor winding 121 and/or a rotor voltage of the rotor winding 121 are positively correlated to the duty cycle of the PWM signal. When the controller 40 increases the duty cycle of the PWM signal sent to the switching circuit 1311, the rotor current and/or the rotor voltage increase. When the controller 40 decreases the duty cycle of the PWM signal sent to the switching circuit 1311, the rotor current and/or the rotor voltage decrease.

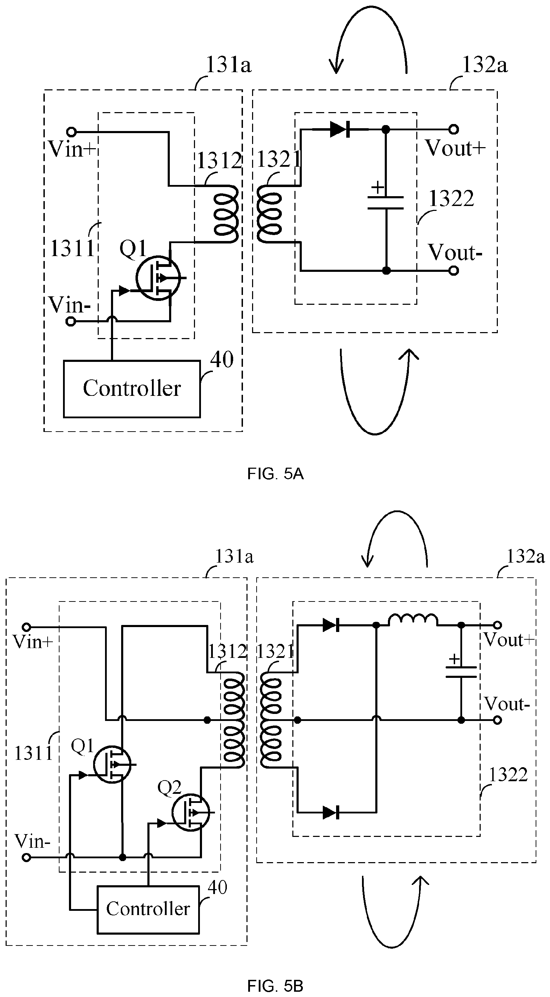

Referring to FIGS. 5A to 5D, a more detailed circuit diagram description of the electric motor 10 shown in FIG. 3, FIG. 4A, and FIG. 4B is provided. In some examples, as shown in FIG. 5A, the switching circuit 1311 in the stationary module 131a may be a flyback switching power supply circuit. For example, the switching circuit 1311 shown in FIG. 5A is a single-ended flyback switching power supply circuit. The single-ended flyback switching power supply circuit uses one switching device to receive the control signal so as to control an on/off state and direction of energy transfer of the coupled inductor. The rectification and filtering circuit 1322 includes at least one diode and may also include components such as capacitors. This example is more suitable for relatively low-power scenarios.

In other examples, as shown in FIG. 5B, the switching circuit 1311 in the stationary module 131a may be a push-pull switching power supply circuit. For example, the push-pull switching power supply circuit uses two switching devices to respectively receive corresponding control signals so as to control the on/off state and direction of the energy transfer of the coupled inductor. The rectification and filtering circuit 1322 includes at least two diodes and may also include components such as inductors and capacitors. This example is more suitable for relatively high-power scenarios.

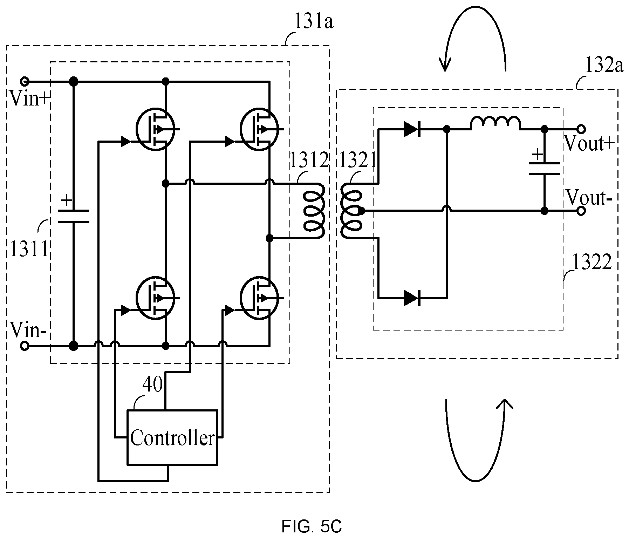

In still other examples, as shown in FIG. 5C, the switching circuit 1311 in the stationary module 131a may be a full-bridge switching power supply circuit. For example, the full-bridge switching power supply circuit uses four switching devices to respectively receive corresponding control signals so as to control the on/off state and direction of the energy transfer of the coupled inductor. The rectification and filtering circuit 1322 includes at least two diodes and may also include components such as inductors and capacitors. This example is more suitable for high-power scenarios.

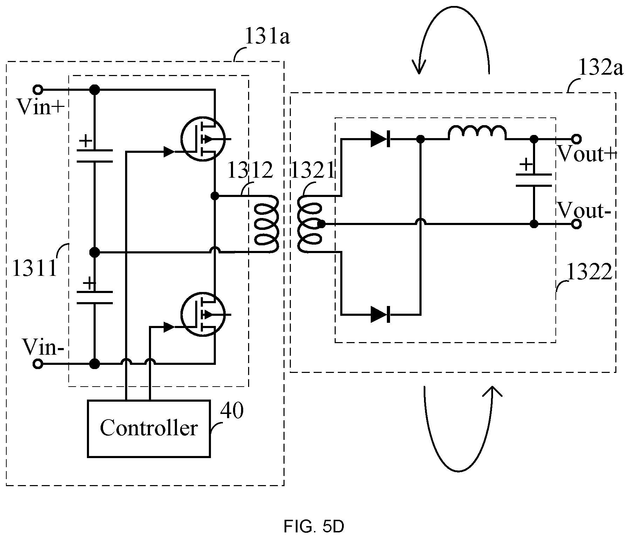

In yet other examples, as shown in FIG. 5D, the switching circuit 1311 in the stationary module 131a may be a half-bridge switching power supply circuit. For example, the half-bridge switching power supply circuit uses two switching devices to respectively receive corresponding control signals so as to control the on/off state and direction of the energy transfer of the coupled inductor. The rectification and filtering circuit 1322 includes at least two diodes and may also include components such as inductors and capacitors. This example can be suitable for a relatively wide range of power scenarios and has relatively low cost.

In some examples, as shown in FIG. 3, the electric motor 10 further includes a second driving device 13c configured to excite the stator magnetic field. The second driving device 13c is fixed, connected between the power supply device 30 and the stator winding 111, and connected to the controller 40. After the power supply device 30 and the controller 40 are connected, the second driving device 13c transfers the electrical energy from the power supply device 30 to the stator winding 111 based on a second control signal from the controller 40. That is, the second driving device 13c energizes the stator winding 111 in a corresponding manner based on the second control signal to generate a dynamic and rotating stator magnetic field. It is to be understood that the second driving device 13c that excites the stator magnetic field is significantly different from the driving device 13a that drives the rotor to rotate. The second driving device 13c is fixed and has no requirements for rotation and non-contact coupling. The second driving device 13c is a common configuration in the electric motor 10, but the driving device 13a described above in the present application is rare. The three-phase electric motor 10 is used as an example, and the second driving device 13c may use six switching devices to separately receive second control signals from the controller 40 so as to control on/off states and directions of the three-phase windings, thereby generating the dynamic and rotating stator magnetic field mentioned above.

Based on the preceding description, due to characteristics of the non-contact electromagnetic coupling, the stability of the voltage and/or current transferred to the rotor winding 121 still requires further improvement. As shown in FIG. 3, in addition to the stator assembly 11, the rotor assembly 12, and the driving device 13a described above, the electric motor 10 further includes a detection device 13b. The detection device 13b is connected between the controller 40 and the rotor winding 121. The detection device 13b detects parameters related to the rotor current of the rotor winding 121 and/or the rotor voltage of the rotor winding 121 and transmits the parameters related to the rotor current of the rotor winding 121 and/or the rotor voltage of the rotor winding 121 to the controller 40. The controller 40 outputs a corresponding control signal to the driving device 13a based on the parameters related to the present rotor current of the rotor winding 121 and/or the present rotor voltage of the rotor winding 121. The controller 40, the driving device 13a, and the detection device 13b mentioned above constitute a closed-loop negative feedback regulation system for dynamically regulating the rotor current of the rotor winding 121 and/or the rotor voltage of the rotor winding 121, thereby reducing fluctuations in the current of the rotor winding 121 and/or the voltage of the rotor winding 121.

In the preceding closed-loop negative feedback regulation system, the controller 40 may determine, based on parameters related to a rotor voltage and/or a rotor current of a previous period provided by the detection device 13b, a control signal outputted to the driving device 13a in a present period. The driving device 13a transfers the electrical energy from the power supply device 30 to the rotor winding 121 under control of the control signal of the present period, and the parameters related to the rotor current and/or the rotor voltage vary accordingly with changes in the electrical energy transferred to the rotor winding 121. The detection device 13b detects the parameters related to the rotor voltage and/or the rotor current of the present period and provides the parameters related to the rotor voltage and/or the rotor current of the current period to the controller 40, thereby affecting output determination of a control signal of the next period. Ultimately, the rotor current and/or the rotor voltage are substantially within a target value range in a dynamically balanced manner. In some examples, the controller 40 may use a proportional-integral-derivative (PID) algorithm to implement dynamic regulation of the rotor current and/or the rotor voltage.

In some examples, the control signal is a PWM signal whose duty cycle is positively correlated to the rotor current and/or the rotor voltage. The controller 40 may dynamically regulate, based on the present rotor current and/or the present rotor voltage provided by the detection device 13b, the duty cycle of the PWM signal outputted to the driving device 13a.

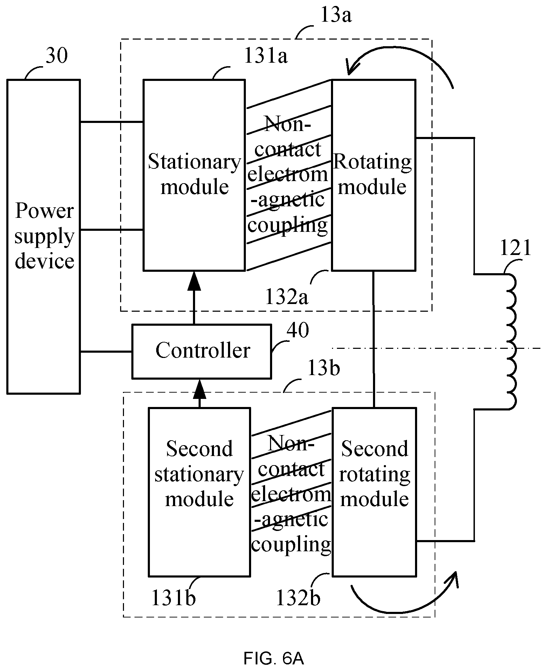

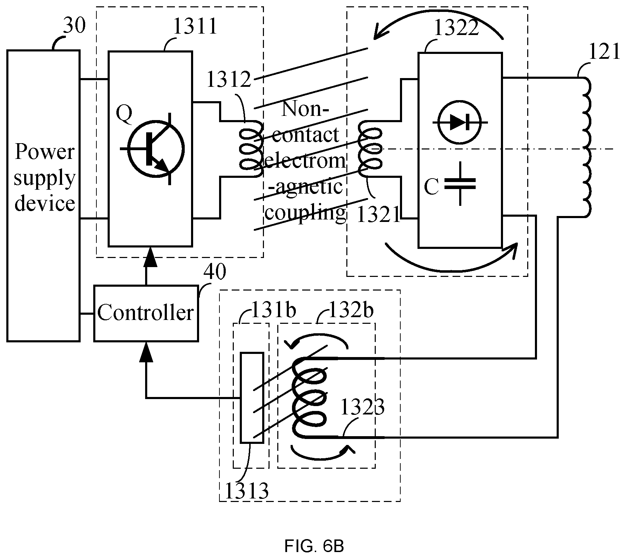

Referring to FIGS. 6A and 6B, a more detailed circuit diagram description of the detection device 13b in the electric motor 10 shown in FIG. 3 is provided. Based on the preceding description, the detection device 13b is connected between the controller 40 and the rotor winding 121. When the electric motor 10 operates, the controller 40 is fixed while the rotor winding 121 rotates. Therefore, the detection device 13b needs to have a structure and circuit suitable for non-contact parameter detection. For example, the detection device 13b may include a second stationary module 131b and a second rotating module 132b. The second stationary module 131b is connected to the controller 40 and remains fixed relative to the controller 40 during the operation of the electric motor 10. The second rotating module 132b is connected to the rotor winding 121 and rotates with the rotor winding 121 during the operation of the electric motor 10. The second stationary module 131b can acquire, through non-contact electromagnetic coupling with the second rotating module 132b, the parameters related to the rotor voltage of the rotor winding 121 and/or the rotor current of the rotor winding 121. The second stationary module 131b then transmits the parameters related to the rotor voltage of the rotor winding 121 and/or the rotor current of the rotor winding 121 to the controller 40 for the controller 40 to perform the output determination of the control signal.

In an optional implementation, as shown in FIG. 6B, the second stationary module 131b includes a Hall element 1313 connected to the controller 40, and the second rotating module 132b includes a detection coil 1323 connected to the rotor winding 121. When the electric motor 10 operates, the detection coil 1323 connected to the rotor winding 121 is energized, and the Hall element 1313 acquires, through a Hall effect between the Hall element 1313 and the detection coil 1323, the parameters related to the rotor current of the rotor winding 121 and/or the rotor voltage of the rotor winding 121. In some examples, the detection coil 1323 and the rotor winding 121 are connected in series, and a current flowing through the detection coil 1323 is substantially equal to the rotor current flowing through the rotor winding 121. Since the current flows through the detection coil 1323, a corresponding magnetic field is generated around the detection coil 1323. The Hall element 1313 may detect a value of an air gap magnetic field between the Hall element 13 and the detection coil 1323 and a variation therein and then deduce values of the rotor current and/or rotor voltage and variations therein. In other examples, as shown in FIGS. 5A to 5D, an output of the secondary coil 1321 passes through the rectification and filtering circuit 1322 and then is outputted to the detection coil 1323 and the rotor winding 121 that are connected in series.

In some examples, as shown in FIG. 3, the electric motor 10 further includes a second detection device 13d. The second detection device 13d is fixed and connected between the controller 40 and the stator winding 111. When the electric motor 10 operates, the second detection device 13d detects parameters related to the stator current of the stator winding 111 and/or a stator voltage of the stator winding 111 and transmits the parameters related to the stator current of the stator winding 111 and/or the stator voltage of the stator winding 111 to the controller 40. In a control mode of the electric motor 10 such as Field-Oriented Control (FOC), the controller 40 may output the corresponding second control signal to the second driving device 13c based on the parameters related to the present stator current of the stator winding 111 and/or the present stator voltage of the stator winding 111. Similar to the preceding description, the second detection device 13d in the electric motor 10 is relatively common, but the detection device 13b in the electric motor 10 of the present application is rare.

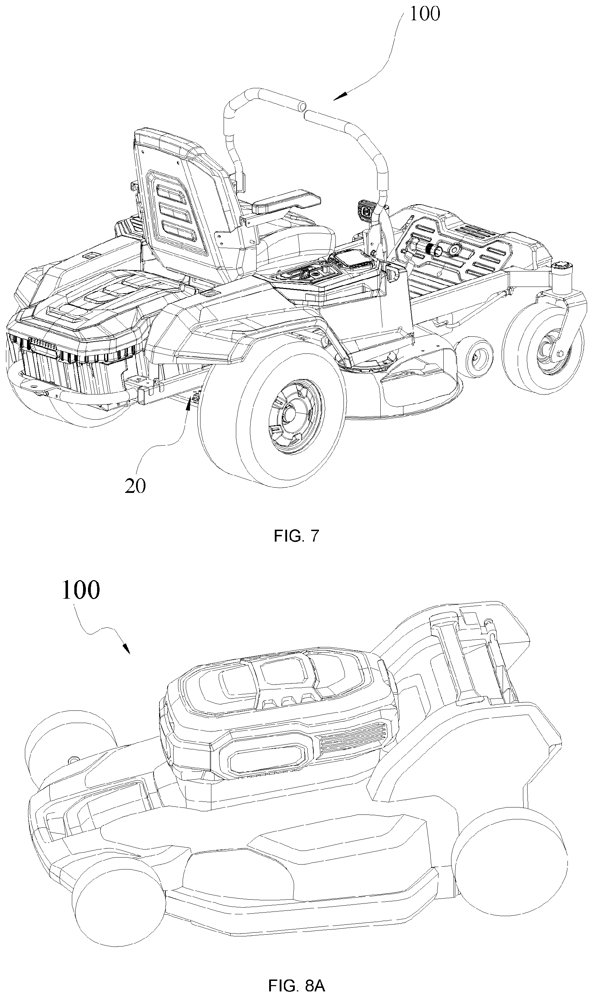

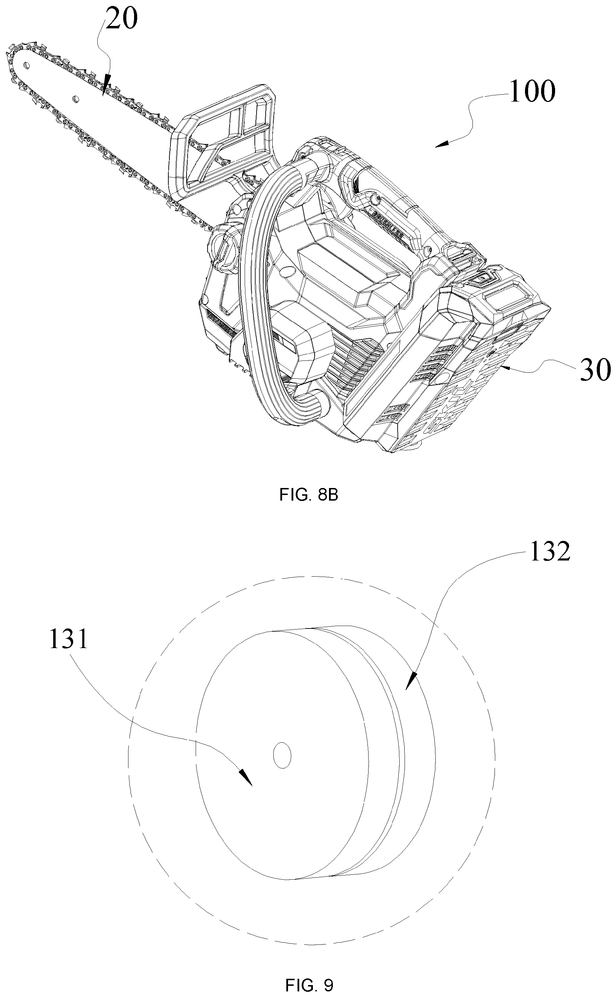

Referring to FIGS. 7, 8A, and 8B, the power tool 100 as an example in the present application is shown therein. It is to be understood that the power tool 100 shown in FIG. 7 is a riding mower. In other examples, the power tool 100 may be an outdoor power apparatus such as a smart mower shown in FIG. 8A, or a handheld tool such as a chainsaw shown in FIG. 8B, or a table tool such as a miter saw. Of course, the power tool 100 adopting the technical solution of the present application is not limited to the preceding categories.

The power tool 100 includes a functional part 20, the electric motor 10, and the power supply device 30. The functional part 20 is a component of the power tool 100 that actually performs cutting, grinding, fastening, cleaning, and other work tasks. For example, the functional part 20 may be a saw blade, a grinding disc, a chain, or a drill bit. The electric motor 10 can drive the functional part 20 to perform work, and the power supply device 30 can supply power to at least the electric motor 10. For example, the power supply device 30 may be the battery pack, which can be connected to a body of the power tool 100 in a detachable or non-detachable manner to supply power to the preceding electric motor 10. A main difference between the power tool 100 in the present application and a power tool 100 in the related art is that the power tool 100 in the present application adopts the novel electric motor 10 described above, and the electric motor 10 is disposed in the power tool 100 with a compact and feasible structure and device arrangement.

The riding mower is used as an example. The riding mower may include an operating assembly that includes the functional part 20 and an operating motor 10a, a traveling assembly that includes a traveling member and a traveling motor 10b, and the power supply device 30. The novel electric motor 10 described above is used as the operating motor 10a and/or the traveling motor 10b, which is shown in FIGS. 1 to 6B and described above.

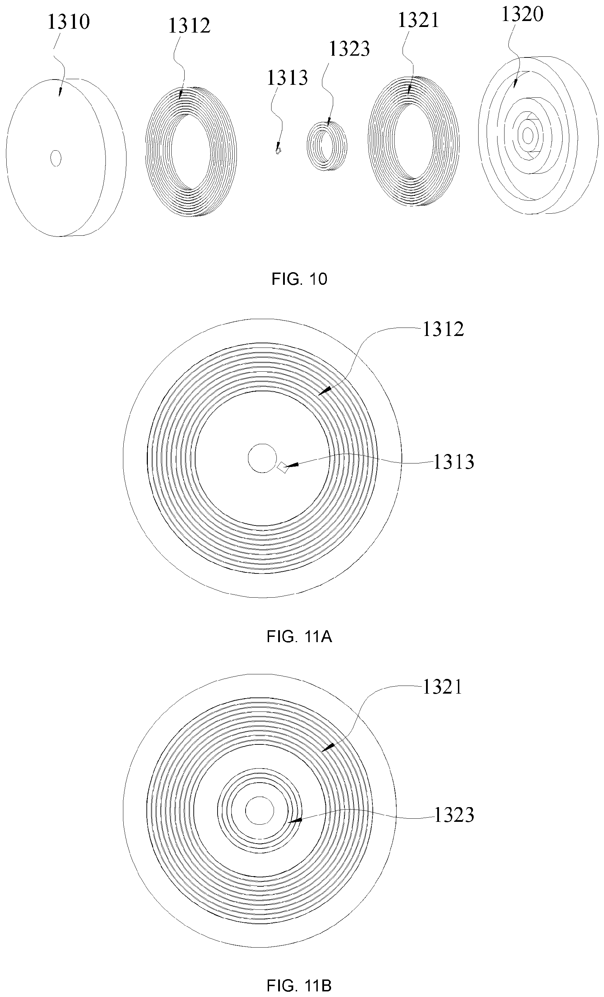

As shown in FIGS. 1 and 2, the electric motor 10 includes the motor shaft 14, the stator assembly 11, the rotor assembly 12, and the control assembly 13. The stator assembly 11, the rotor assembly 12, and the control assembly 13 are coaxially disposed, and axes thereof are collinear with the axis of the motor shaft 14. The stator assembly 11 and the rotor assembly 12 are nested with each other. Similar to the preceding description, the stator assembly 11 includes the stator winding 111 that is fixed during operation of the power tool 100, and the rotor assembly 12 includes the rotor winding 121 that rotates during the operation of the power tool 100. Referring to FIG. 9, a perspective view of the control assembly 13 in the electric motor 10 as an example in the present application is shown therein. Referring to FIG. 10, an exploded view of the control assembly 13 in the electric motor 10 shown in FIG. 9 is shown therein. The control assembly 13 includes a stationary portion 131 and a rotating portion 132. The stationary portion 131 remains fixed relative to the stator assembly 11 during the operation of the power tool 100, and the rotating portion 132 rotates about the motor shaft 14 with the rotor winding 121 during the operation of the power tool 100. The non-contact electromagnetic coupling can be implemented between the stationary portion 131 and the rotating portion 132 so that the control assembly 13 can transfer the electrical energy from the power supply device 30 to the rotor winding 121 and/or detect parameters related to the rotor current, the rotor voltage, and the like of the rotor winding 121.

In some examples, as shown in FIGS. 1, 2, 9, and 10, the stationary portion 131 of the control assembly 13 and the rotating portion 132 of the control assembly 13 respectively include respective housings to accommodate, support, and protect respective components in the housings. The stationary portion 131 and the rotating portion 132 may be sleeved on the motor shaft 14 through their respective housings. In some examples, the stationary portion 131 and the rotating portion 132 perform the electromagnetic coupling along an axial direction of the motor shaft 14. Coupling surfaces exist in the axial direction of the motor shaft 14. The coupling surfaces are perpendicular to the axial direction of the motor shaft 14. A projection of the stationary portion 131 and a projection of the rotating portion 132 along the axial direction of the motor shaft 14 at least partially coincide. For example, as shown in FIGS. 9 and 10, the stationary portion 131 and the rotating portion 132 are provided with a first annular housing 1310 and a second annular housing 1320 along the axial direction of the motor shaft 14, respectively. The motor shaft 14 is inserted through a through hole in the middle of each of the annular housings. The stationary portion 131 and the rotating portion 132 at least partially coincide in the axial direction of the motor shaft 14.

In some examples, as shown in FIGS. 1 and 2 and FIGS. 9 to 11B, the stationary portion 131 and the rotating portion 132 perform the non-contact coupling, the housing of the stationary portion 131 and the housing of the rotating portion 132 do not contact each other, and a projection of the stationary portion 131 and a projection of the rotating portion 132 along a radial direction of the motor shaft 14 do not coincide.

In some examples, the power tool 100 further includes the controller 40 that controls the running of the electric motor 10. The control assembly 13 of the electric motor 10 includes the driving device 13a. The driving device 13a is connected between the power supply device 30 and the rotor winding 121 and receives the control signal from the controller 40. The driving device 13a may transfer the electrical energy from the power supply device 30 to the rotor winding 121 through the non-contact electromagnetic coupling under the control of the control signal from the controller 40.

Based on the preceding description, as shown in FIGS. 9 and 10, the driving device 13a includes the stationary module 131a and the rotating module 132a. The stationary module 131a of the driving device 13a belongs to the stationary portion 131 of the control assembly 13 of the electric motor 10, and the rotating module 132a of the driving device 13a belongs to the rotating portion 132 of the control assembly 13 of the electric motor 10. Referring to FIG. 11A, the coupling surface of the stationary portion 131 in the control assembly 13 of the electric motor 10 shown in FIG. 10 in the axial direction of the motor shaft 14 is shown therein. Referring to FIG. 11B, the coupling surface of the rotating portion 132 in the control assembly 13 of the electric motor 10 shown in FIG. 10 in the axial direction of the motor shaft 14 is shown therein. In some examples, the driving device 13a implements the non-contact electrical energy transfer through the coupled inductor. The stationary module 131a of the driving device 13a includes the primary coil 1312 of the coupled inductor, and the rotating module 132a of the driving device 13a includes the secondary coil 1321 of the coupled inductor. In some examples, as shown in FIGS. 1 and 2 and FIGS. 9 to 11B, the primary coil 1312 is accommodated in the first annular housing 1310 of the stationary portion 131 of the control assembly 13. An annular groove for placing the primary coil 1312 is formed in the first annular housing 1310 of the stationary portion 131. The primary coil 1312 is sleeved on the motor shaft 14 together with the first annular housing 1310 of the stationary portion 131 and remains fixed during the operation of the power tool 100. In other examples, the secondary coil 1321 is accommodated in the second annular housing 1320 of the rotating portion 132 of the control assembly 13. An annular groove for placing the secondary coil 1321 is formed in the second annular housing 1320 of the rotating portion 132. The secondary coil 1321 is sleeved on the motor shaft 14 together with the second annular housing 1320 of the rotating portion 132 and rotates about the motor shaft 14 with the rotor winding 121 during the operation of the power tool 100.

In some examples, as shown in FIGS. 1 and 2 and FIGS. 9 to 11B, a projection of the primary coil 1312 of the driving device 13a and a projection of the secondary coil 1321 of the driving device 13a along the axial direction of the motor shaft 14 coincide. The primary coil 1312 and the secondary coil 1321 may be disposed face to face along the axial direction of the motor shaft 14. In other examples, a projection of the primary coil 1312 of the driving device 13a and a projection of the secondary coil 1321 of the driving device 13a along the radial direction of the motor shaft 14 do not coincide, and the primary coil 1312 and the secondary coil 1321 do not overlap.

In some examples, the control assembly 13 of the electric motor 10 includes the detection device 13b. The detection device 13b is connected between the controller 40 and the rotor winding 121. The detection device 13b may detect, through the non-contact electromagnetic coupling, the parameters related to the rotor current of the rotor winding 121 and/or the rotor voltage of the rotor winding 121 and transmit the parameters related to the rotor current of the rotor winding 121 and/or the rotor voltage of the rotor winding 121 to the controller 40.

Based on the preceding description, as shown in FIGS. 9 and 10, the detection device 13b includes the second stationary module 131b and the second rotating module 132b. The second stationary module 131b of the detection device 13b belongs to the stationary portion 131 of the control assembly 13 of the electric motor 10, and the second rotating module 132b of the detection device 13b belongs to the rotating portion 132 of the control assembly 13 of the electric motor 10. In some examples, as shown in FIGS. 1 and 2 and FIGS. 9 to 11B, the second stationary module 131b of the detection device 13b includes the Hall element 1313 connected to the controller 40, and the second rotating module 132b of the detection device 13b includes the detection coil 1323 connected to the rotor winding 121. The Hall element 1313 senses the air gap magnetic field around the detection coil 1323 through the Hall effect and then acquires the parameters related to the rotor current and/or the rotor voltage. In some examples, the Hall element 1313 is disposed on the first annular housing 1310 of the stationary portion 131 of the control assembly 13 and remains fixed during the operation of the power tool 100. In other examples, the detection coil 1323 is accommodated in the second annular housing 1320 of the rotating portion 132 of the control assembly 13. An annular groove for placing the detection coil 1323 is formed in the second annular housing 1320 of the rotating portion 132. The detection coil 1323 is sleeved on the motor shaft 14 together with the second annular housing 1320 of the rotating portion 132 and rotates about the motor shaft 14 with the rotor winding 121 during the operation of the power tool 100.

In some examples, as shown in FIGS. 1 and 2 and FIGS. 9 to 11B, a projection of the Hall element 1313 of the detection device 13b and a projection of the detection coil 1323 of the detection device 13b along the axial direction of the motor shaft 14 at least partially coincide. The Hall element 1313 and the detection coil 1323 may be disposed face to face along the axial direction of the motor shaft 14. In other examples, a projection of the Hall element 1313 of the detection device 13b and a projection of the detection coil 1323 of the detection device 13b along the radial direction of the motor shaft 14 do not coincide, and the Hall element 1313 and the detection coil 1323 do not overlap.

In some examples, a projection of the driving device 13a and a projection of the detection device 13b along the axial direction of the motor shaft 14 do not coincide so that the energy transfer of the driving device 13a is prevented from interfering with the detection of the relevant parameters in the detection device 13b. For example, as shown in FIGS. 11A and 11B, the Hall element 1313 of the detection device 13b and the detection coil 1323 of the detection device 13b may be disposed on an inner side along the radial direction of the motor shaft 14, and the primary coil 1312 and secondary coil 1321 of the coupled inductor in the driving device 13a may be disposed on an outer side along the radial direction of the motor shaft 14.

The preceding content provides a specific structure and device arrangement for using the novel electric motor 10 described above in the power tool 100, which has the advantages of a compact structure and excellent performance. However, due to the configurations of the rotor winding and the control assembly in the electric motor, dimensional parameters of the electric motor do increase accordingly, and other parameters of the electric motor also undergo specific variations. In some examples, a ratio of output power of the electric motor to an outer diameter of the electric motor in the power tool is less than or equal to 100 W/mm. In some examples, the outer diameter of the electric motor is greater than or equal to 80 mm and less than or equal to 250 mm. In some examples, the number of pole pairs of the rotor winding of the electric motor is 2 to 4, that is, the number of poles of the rotor of the electric motor is 4, 6, or 8.

In some examples, the preceding solution is applicable to a riding mower, a stand-on mower, a smart mower, a snow thrower, a cleaning machine, an agricultural harvester, a utility task vehicle (UTV) /a utility vehicle, an all-terrain vehicle (ATV)/a dune buggy, a golf cart, and the like. In the present application, the self-driving apparatus is used to refer to the preceding apparatuses that can travel on their own without being manually pushed or pulled.

Technical effects of the present application include at least providing the synchronous motor without the permanent magnet and the brush and the power tool adopting the synchronous motor, thereby avoiding the demagnetization of the permanent magnet and reducing the related costs. In addition, the stator magnetic field of the electric motor and the rotor magnetic field of the electric motor are each controllable and can be suitable for requirements of various operating conditions of the power tool. Furthermore, the specific structure and device arrangement in the electric motor is provided, which has the advantages of the compact structure and the excellent performance.

The basic principles, main features, and advantages of this application are shown and described above. It is to be understood by those skilled in the art that the aforementioned examples do not limit the present application in any form, and all technical solutions obtained through equivalent substitutions or equivalent transformations fall within the scope of the present application.

## Claims

1. A power tool, comprising:
a functional part;
an electric motor that drives the functional part to perform work; and
a power supply device that supplies power to at least the electric motor;
wherein the electric motor comprises a motor shaft, a stator assembly, a rotor assembly, and a control assembly, wherein the stator assembly, the rotor assembly, and the control assembly are coaxially disposed along the motor shaft, and the stator assembly and the rotor assembly are nested with each other;
the rotor assembly comprises a rotor winding, the control assembly comprises a stationary portion and a rotating portion, the stationary portion remains fixed relative to the stator assembly during operation of the power tool, and the rotating portion rotates about the motor shaft with the rotor winding during the operation of the power tool; and
through non-contact coupling between the stationary portion and the rotating portion, the control assembly transfers electrical energy from the power supply device to the rotor winding or detects parameters related to a rotor current of the rotor winding and/or a rotor voltage of the rotor winding.

2. The power tool according to claim 1, wherein the electric motor is a brushless electrically excited synchronous motor.

3. The power tool according to claim 1, wherein a projection of the stationary portion and a projection of the rotating portion along an axial direction of the motor shaft at least partially coincide.

4. The power tool according to claim 3, wherein a projection of the stationary portion and a projection of the rotating portion along a radial direction of the motor shaft do not coincide.

5. The power tool according to claim 1, wherein the stationary portion and the rotating portion cooperate to perform non-contact electromagnetic coupling to transfer the electrical energy from the power supply device to the rotor winding or detect the parameters related to the rotor current of the rotor winding and/or the rotor voltage of the rotor winding.

6. The power tool according to claim 5, further comprising a controller that controls running of the electric motor, wherein the control assembly comprises a detection device connected between the controller and the rotor winding, and the detection device detects the rotor current of the rotor winding and/or the rotor voltage of the rotor winding and transmits the rotor current of the rotor winding and/or the rotor voltage of the rotor winding to the controller.

7. The power tool according to claim 6, wherein the detection device comprises a detection coil connected to the rotor winding, the rotating portion comprises the detection coil, and the detection coil is sleeved on the motor shaft.

8. The power tool according to claim 7, wherein the detection device further comprises a Hall element connected to the controller, the stationary portion comprises the Hall element, and the Hall element acquires, through a Hall effect between the Hall element and the detection coil, the parameters related to the rotor current and/or the rotor voltage.

9. The power tool according to claim 6, wherein the control assembly further comprises a driving device connected between the power supply device and the rotor winding, and the driving device transfers the electrical energy from the power supply device to the rotor winding.

10. The power tool according to claim 9, wherein the controller outputs a corresponding control signal to the driving device based on the parameters related to the rotor current and/or the rotor voltage, and the driving device, the detection device, and the controller constitute a closed-loop negative feedback regulation system for dynamically regulating the rotor current of the rotor winding and/or the rotor voltage of the rotor winding.

11. The power tool according to claim 9, wherein the driving device comprises a coupled inductor, the coupled inductor comprises a secondary coil connected to the rotor winding, the rotating portion comprises the secondary coil, and the secondary coil is sleeved on the motor shaft.

12. The power tool according to claim 9, wherein the coupled inductor further comprises a primary coil connected to the power supply device, the stationary portion comprises the primary coil, and the primary coil is sleeved on the motor shaft.

13. The power tool according to claim 9, wherein the driving device further comprises a switching circuit connected between the power supply device and a coupled inductor, and the switching circuit receives a control signal from the controller and transfers the electrical energy from the power supply device to the coupled inductor based on the control signal.

14. The power tool according to claim 1, further comprising a controller that controls running of the electric motor, wherein the stator assembly comprises a stator winding that remains fixed during operation of the electric motor, a second driving device is connected between the stator winding and the power supply device, and the second driving device receives a second control signal from the controller and transfers the electrical energy from the power supply device to the stator winding based on the second control signal.

15. The power tool according to claim 14, wherein a second detection device is connected between the stator assembly and the controller, and the second detection device detects parameters related to a stator current of the stator winding and/or a stator voltage of the stator winding and transmits the parameters related to the stator current of the stator winding and/or the stator voltage of the stator winding to the controller.

16. A self-driving apparatus, comprising:
an operating assembly comprising a functional part and an operating motor that drives the functional part;
a traveling assembly comprising a traveling member and a traveling motor that drives the traveling member; and
a power supply device that supplies power to at least the operating motor and the traveling motor;
wherein the operating motor or the traveling motor comprises a motor shaft, a stator assembly, a rotor assembly, and a control assembly, the stator assembly, the rotor assembly, and the control assembly are coaxially disposed along the motor shaft, and the stator assembly and the rotor assembly are nested with each other;
the rotor assembly comprises a rotor winding, the control assembly comprises a stationary portion and a rotating portion, the stationary portion remains fixed relative to the stator assembly during operation of the self-driving apparatus, and the rotating portion rotates about the motor shaft with the rotor winding during the operation of the self-driving apparatus; and
through non-contact coupling between the stationary portion and the rotating portion, the control assembly transfers electrical energy from the power supply device to the rotor winding or detects parameters related to a rotor current of the rotor winding and/or a rotor voltage of the rotor winding.

17. An electric motor, comprising:
a stator assembly and a rotor assembly, wherein the rotor assembly comprises a rotor winding that rotates during operation of the electric motor;
wherein a driving device is connected between the rotor winding and a power supply device, and the driving device comprises a stationary module that is connected to the power supply device and remains fixed and a rotating module that is connected to the rotor winding and rotates with the rotor winding; and
the stationary module is further connected to a controller and receives a control signal from the controller, wherein the stationary module transfers electrical energy from the power supply device to the rotating module based on the control signal through non-contact coupling with the rotating module, and the electrical energy is subsequently transferred to the rotor winding.

18. The electric motor according to claim 17, wherein the driving device performs direct current-direct current (DC-DC) conversion under control of the control signal.

19. The electric motor according to claim 17, wherein the stationary module comprises a full-bridge switching power supply circuit.

20. The electric motor according to claim 17, wherein the control signal is a pulse-width modulation signal, and a rotor current of the rotor winding and/or a rotor voltage of the rotor winding are positively correlated to a duty cycle of the pulse-width modulation signal.

21. An electric motor, comprising:
a stator assembly and a rotor assembly, wherein the rotor assembly comprises a rotor winding that rotates during operation of the electric motor;
wherein a driving device is connected between the rotor winding and a power supply device, and the driving device comprises a stationary module that is connected to the power supply device and remains fixed and a rotating module that is connected to the rotor winding and rotates with the rotor winding; and
the stationary module is further connected to a controller and receives a control signal from the controller, wherein the stationary module transfers electrical energy from the power supply device to the rotating module based on the control signal through non-contact coupling with the rotating module, and the electrical energy is subsequently transferred to the rotor winding.

22. The electric motor according to claim 21, wherein the electric motor is a brushless electrically excited synchronous motor.

23. The electric motor according to claim 21, wherein the power supply device is a battery pack.

24. The electric motor according to claim 21, wherein the stationary module and the rotating module cooperate to perform non-contact electromagnetic coupling to transfer the electrical energy from the power supply device to the rotating module.

25. The electric motor according to claim 21, wherein the driving device performs direct current-direct current (DC-DC) conversion under control of the control signal.

26. The electric motor according to claim 21, wherein the stationary module comprises a switching circuit and a primary coil of a coupled inductor, and the rotating module comprises a secondary coil of the coupled inductor, wherein the switching circuit is connected between the power supply device and the primary coil, receives the control signal from the controller, and transfers the electrical energy from the power supply device to the primary coil based on the control signal.

27. The electric motor according to claim 26, wherein the rotating module further comprises a rectification and filtering circuit connected between the secondary coil and the rotor winding.

28. The electric motor according to claim 26, wherein the switching circuit is a full-bridge switching power supply circuit.

29. The electric motor according to claim 24, wherein a detection device is connected between the rotor winding and the controller, and the detection device detects parameters related to a rotor current of the rotor winding and/or a rotor voltage of the rotor winding and transmits the parameters related to the rotor current of the rotor winding and/or the rotor voltage of the rotor winding to the controller.

30. The electric motor according to claim 29, wherein the stator assembly comprises a stator winding that remains fixed during the operation of the electric motor, a second driving device is connected between the stator winding and the power supply device, and the second driving device receives a second control signal from the controller and transfers the electrical energy from the power supply device to the stator winding based on the second control signal.

31. The electric motor according to claim 30, wherein a second detection device is connected between the stator assembly and the controller, and the second detection device detects parameters related to a stator current of the stator winding and/or a stator voltage of the stator winding and transmits the parameters related to the stator current of the stator winding and/or the stator voltage of the stator winding to the controller.

32. The electric motor according to claim 31, wherein the controller outputs the corresponding control signal to the driving device based on parameters related to one or more of the rotor current, the rotor voltage, the stator current, and the stator voltage; and/or, the controller outputs the corresponding second control signal to the second driving device based on parameters related to one or more of the stator current, the stator voltage, the rotor current, and the rotor voltage.

33. The electric motor according to claim 21, wherein the control signal is a pulse-width modulation signal, and a rotor current and/or a rotor voltage are positively correlated to a duty cycle of the pulse-width modulation signal.

34. A power tool, comprising:
a functional part;
an electric motor that drives the functional part to perform work; and
a power supply device that supplies power to at least the electric motor;
wherein the electric motor is the electric motor according to any one of claims 21 to 33.

35. An electric motor, comprising:
a stator assembly and a rotor assembly, wherein the rotor assembly comprises a rotor winding that rotates during operation of the electric motor;
wherein a driving device is connected between the rotor winding and a power supply device, and the driving device is further connected to a controller, receives a control signal from the controller, and transfers electrical energy from the power supply device to the rotor winding based on the control signal;
a detection device is connected between the rotor winding and the controller, and the detection device detects parameters related to a rotor current of the rotor winding and/or a rotor voltage of the rotor winding and transmits the parameters related to the rotor current of the rotor winding and/or the rotor voltage of the rotor winding to the controller; and
the controller outputs the corresponding control signal to the driving device based on the parameters related to the rotor voltage and/or the rotor current, and the driving device, the detection device, and the controller constitute a closed-loop negative feedback regulation system for dynamically regulating the rotor current of the rotor winding and/or the rotor voltage of the rotor winding.

36. The electric motor according to claim 35, wherein the control signal is a pulse-width modulation signal, and the controller regulates a duty cycle of the pulse-width modulation signal based on the parameters related to the rotor current and/or the rotor voltage from the detection device.

37. The electric motor according to claim 36, wherein the duty cycle of the pulse-width modulation signal is positively correlated to the rotor current and/or the rotor voltage.

38. The electric motor according to claim 35, wherein the detection device comprises a second stationary module that is connected to the controller and remains fixed and a second rotating module that is connected to the rotor winding and rotates with the rotor winding, and the second stationary module acquires, through non-contact electromagnetic coupling with the second rotating module, the parameters related to the rotor current and/or the rotor voltage and transmits the parameters related to the rotor current and/or the rotor voltage to the controller.

39. The electric motor according to claim 38, wherein the second stationary module comprises a Hall element, and the second rotating module comprises a detection coil, wherein the Hall element acquires, through a Hall effect between the Hall element and the detection coil, the parameters related to the rotor current and/or the rotor voltage.

40. The electric motor according to claim 35, wherein the driving device comprises a stationary module that is connected to the power supply device and remains fixed and a rotating module that is connected to the rotor winding and rotates with the rotor winding, wherein the stationary module comprises a switching circuit and a primary coil of a coupled inductor, and the rotating module comprises a secondary coil of the coupled inductor, wherein the switching circuit is connected between the power supply device and the primary coil and transfers the electrical energy from the power supply device to the primary coil based on the control signal.

41. The electric motor according to claim 40, wherein the rotating module further comprises a rectification and filtering circuit connected between the secondary coil and the rotor winding.

42. The electric motor according to claim 41, wherein a detection coil is connected between the rectification and filtering circuit and the rotor winding.

43. The electric motor according to claim 42, wherein the detection coil and the rotor winding are connected in series, and a current flowing through the detection coil is substantially the same as a current flowing through the rotor winding.

44. The electric motor according to claim 40, wherein the controller dynamically regulates, based on parameters related to the rotor current and/or the rotor voltage received at present, the control signal outputted to the switching circuit, so as to reduce a fluctuation in the rotor current.

45. A power tool, comprising:
a functional part;
an electric motor that drives the functional part to perform work; and
a power supply device that supplies power to at least the electric motor;
wherein the electric motor is the electric motor according to any one of claims 35 to 44.
